# EUROPEAN PATENT SPECIFICATION

(11) **EP 1 051 913 B1**
(45) Date of publication and mention of the grant of the patent: **12.09.2007**
(21) Application number: 00110367.0
(22) Date of filing: 15.05.2000
(51) Int. Cl.: A23G 9/48, A23G 9/22, A23G 9/14, A23G 9/32, A23G 9/44

(54) **Cold confectionery and method of preparing the same**
Kaltes Konfektprodukt und Verfahren zur Herstellung
Confiserie froide et procédé pour sa fabrication

(30) Priority: 14.05.1999 JP 13503299
(43) Date of publication of application: 15.11.2000
(73) Proprietor: LOTTE CO., LTD, Shinjuku-ku Tokyo (JP)
(72) Inventor: Yokota, Yoshihiro, Saitama (JP); Masuda, Yutaka, Kitakatsushika-gun, Saitama (JP); Usui, Masakatsu, Tokyo (JP)
(74) Representative: Westendorp, Michael Oliver

(56) References cited:
- WO-A-97/04663
- US-A- 4 031 262
- US-A- 4 310 559
- US-A- 4 500 553
- US-A- 4 737 372
- US-A- 4 786 002
- US-A- 5 660 866
- US-A- 5 698 247
- US-A- 5 738 889
- DATABASE WPI Section Ch, Week 199345 Derwent Publications Ltd., London, GB; Class D13, AN 1993-356435 XP002146201 & JP 05 260945 A (NAGATANIEN KK), 12 October 1993 (1993-10-12)
- PATENT ABSTRACTS OF JAPAN vol. 1995, no. 04, 31 May 1995 (1995-05-31) & JP 07 008175 A (MORINAGA & CO LTD), 13 January 1995 (1995-01-13)
- PATENT ABSTRACTS OF JAPAN vol. 1997, no. 09, 30 September 1997 (1997-09-30) & JP 09 121778 A (MORINAGA &CO LTD), 13 May 1997 (1997-05-13)
- PATENT ABSTRACTS OF JAPAN vol. 015, no. 456 (C-0886), 20 November 1991 (1991-11-20) & JP 03 195457 A (MEIJI MILK PROD CO LTD), 27 August 1991 (1991-08-27)

## Description

This invention relates to a cold confectionery having a smooth feeling in mouth and a smooth spoonability and also including ice fragments of such a size as to enable a person to sense the ice fragments in eating the cold confectionery, for being enjoyable to both the smooth feeling in mouth and the cold and cool feeling as ice, and a method of preparing the cold confectionery.

Ice creams, sherbet and shaved ices, for example, have been known as cold confectioneries. Ice creams are cold confectioneries which contain large amounts of fat and milk components, such as the ice cream, iced milk and lacto-ice as defined in the fair competition regulations. The feature of the ice creams largely depend upon the manufacturing processes, wherein a special machine so called to as an ice cream freezer is used so that an ice cream mix is introduced into an iced tube of a double tube in the ice cream freezer, whereby the ice cream mix is cooled and frozen by a cooling medium together with stilling and admixing the same, thereby to prepare a homogeneous and smooth texture which includes fine ice crystals which have been formed by crystallization of moisture in the ice cream mix. The size of the ice crystals in the ice cream is very fine in the range of about 30 to 40 µm immediately after freezing process and in the range of about 45 to 55 µm after complete hardening (Source: S. Yuyama, "Methods for the Manufacture of Ice Cream", published by the Korinsha Publishing Co.). The ice crystals have such a size as being insensible in eating the ice creams. The ice creams have a smooth and creamy texture and mouth-feeling free of rough-feeling. Since they do not contain ice fragments of such a size as sensible, they are poor in such cool and cold feelings as sensible to ice fragments.

Exceptionally, if a remarkable increase in temperature of the product appears during storage or transportation, then the ice crystals in the ice creams are grown and become recognizable sizes (coarse ice crystals). In this case, the creams are made free of the good texture and good feeling in mouth and are made poor in cold and cool feelings. Thus, the ice creams are deteriorated. The coarse ice crystals are not less than 0.06 mm in size and are non-uniformly distributed in the ice creams.

The sherbet is completely free of non-fat milk solids or includes the non-fat milk solids but only at less than 3%. The sherbet belongs to the cold confectioneries which are defined by fair competition regulations. The sherbet is completely free of oils and fats or includes the oils and fats but only at less than 1.0%. Usually, the sherbet are manufactured using normal fruit juice, fruit flesh, *adzuki*-bean jelly or powdered tea as the flavor material. Since the sherbet is, usually, manufactured using the ice cream freezer, similarly to the ice creams, the sherbet has a smooth texture and a smooth feeling in mouth, and is insensible to the presence of ice fragments in the mouth.

On the other hand, shaved ices have been used in Japan's summer season which is high in temperature and humidity. They have been known not only as a foodstuff but also as summer-seasonal customs. In recent years, however, the public taste was changed due to European and American style dietary habits, and further consumer's living environment was changed. Thus, the comsumption of the shaved ice has come down. In the height of summer, the ice confectioneries such as sherbet and shaved ice providing cool-feelings have remain more attractive than the other type cold confectioneries such as the ice creams providing rich flavor.

In general, a mass of ice is shaved into coarse ice fragments of about a few millimeters in size for subsequent serving the same along with a syrup in the store. Alternatively, the shaved ice is also packed into a plastic cup for selling the same as a mass product. If the ice mass is shaved in the store for prompt serving the same with the syrup, the shaved ice has crisp taste and spoonability. The shaved ice is packed into the cup in the completely frozen state for commercial sale, wherein during a time period from the manufacturing to sale, the shaved ice is partially melted and then re-frozen, whereby the shaved ice is made united to form such large ice crystals. Since the shaved ice is coarser, the crisp taste and spoonability are lost, resulting in a hard and crunchy texture and taste. However, shaved ices provide a strong cool-feeling due to the presence of ice fragments of such a size as visible.

Various methods have been tried for improving these weaknesses of shaved ices. For example, is has been known that in order to prevent the shaved ice from being melt, the shaved ice is filled into the cup under a low temperature maintained in the range of 0 to -10°C, before a syrup maintained at a low temperature is added thereto, so as to prevent the deterioration in taste due to melting the shaved ice.
It has also been known that the shaved ice is mixed with a cold syrup for subsequent cooling and admixture process by use of the ice cream freezer similarly to the ice creams prior to packing the same into the cup.

In the former method, the crisp light taste is maintained even after the product has been completely harden. Notwithstanding, the main part comprises the shaved ice which provides no taste, for which reason the product is rich in cold and cool-feeling but poor in the taste. The later type has a large content of air and is poor in cold and cool feeling due to the presence of the ice fragments is good in the texture and taste which provides a rich flavor.

In other cold confectioneries which have been produced by the prior art include, a syrup-like cold confectionery mix is rapidly frozen to form an ice mass before breaking the same into a size in the range of 10-20 mm. A mix with a sugar degree of about 10 to 20 is filled directly into an ice tube and then a wood or plastic stick is inserted thereunto, so that for freezing and hardening the same to form a hard bar. The texture and substance-properties are closer to the ice mass and the hard bar is poor in providing a soft feeling.

The size of the ice and the texture and flavor characteristics of typical cold confectioneries already produced and sold are summarized on Table 1.

**Table 1**

| | Ice Creams | Sherbet | Shaved ices |
|---|---|---|---|
| Size of the Ice | 0.03 to 0.06 mm | 0.03 to 0.06 mm | a few mm to 10 mm |
| Ice Fragments sensible? | No | No | Yes, Clearly |
| Refreshing Coolness | Normal | relatively Strong | Very Strong |
| Smoothness | Smooth | relatively Smooth | poor |

The differences in the textures and flavors of these cold confectioneries obtained using the prior art are caused by the manufacturing processes. These differences are unavoidable to the conventional manufacturing methods.

That is to say, in the past actual market, there was no cold confectionery which contains the large amount of ice fragments sensible in eating the product and which are smooth in texture and taste and also are rich in cold and cool feeling as well as flavor and taste.

US 4,737,372 discloses a method for preparing a milk-shake product. The product is prepared by freezing at least two portions of its constituents under different conditions, such that clearly different ice crystals are generated. The combined portions are freezed to a storing temperature below -15°C. For consumption the frozen product is partly thawed using a controlled amount of microwave energy. The particle size distribution of the ice crystals in the frozen mix can be very broad, i.e. considerably broader than in conventional aerated ice-cream products. The milk-shake product is prepared by preparing a first portion containing quite coarse ice particles with a particle size range from e.g. about 100 microns to about 1000 microns, and a second portion which contains ice crystals of a much smaller size.

US 4,500,553 discloses a method of producing a frozen, dual-textured confection comprising a cream and a gelatine-containing aerated phase and a natural or simulated fruit phase. Both phases contain a gum stabilizer to aid in retarding the growth of ice crystals at freezer temperatures of about -18°C used in the preparation of the frozen confection. The ice crystal growth in the frozen confectionary is preferably limited to a size between 10 and 150 micron to provide a smooth, non-icy or grainy frozen confection.

Accordingly, it is an object of the present invention to solve the above problems and to provide a cold confectionery and a method of preparing the same, wherein the cold confectionery has such homogeneous and smooth texture and taste as the ice creams and sherbet and also include a sufficient amount of ice fragments apparently sensible in mouth for providing a rich cold and cool feeling.

The present invention provides a cold confectionery having fine ice fragments, wherein a length in a longitudinal axis direction of said ice fragments is not more than 1.0 mm and an average value thereof is in the range of 0.06 mm to 0.6 mm, and at least 80% of the ice fragments is in the range of 0.06 mm to 1.0 mm.

It is preferable that the average value thereof is in the range of 0.11 mm to 0.6 mm.

It is also preferable that at least 90% of the ice fragments is in the range of 0.06 mm to 1.0 mm. In this case, it is further preferable that the average value thereof is in the range of 0.11 mm to 0.6 mm.

It is also preferable that the cold confectionery has a fat content of not less than 3% and a non-fat milk solid content of not less than 3%.

It is also preferable that the cold confectionery has a fat content of less than 3% and a non-fat milk solid content of less than 3%.

The present invention also provides a method of preparing a cold confectionery having ice fragments which are prepared by a pulverizing equipment, wherein a length in a longitudinal axis direction of the ice fragments is not more than 1.0 mm and an average value thereof is in the range of 0.06 mm to 0.6 mm, and at least 80 % of the ice fragments is in the range of 0.06 to 1.0 mm.

It is preferable that the average value thereof is in the range of 0.11 mm to 0.6 mm.

It is also preferable that at least 90% of the ice fragments is in the range of 0.06 mm to 1.0 mm. In this case, it is further preferable that the average value thereof is in the range of 0.11 mm to 0.6 mm.

It is preferable that the pulverizing equipment is a continuous-type fine pulverizing equipment.

In a preferred embodiment the present invention further provides a method of preparing a cold confectionery, wherein lumps of ice are mixed with a cold confectionery mix frozen by a freezer to obtain a mixture and subsequently the mixture is then treated by a continuous-type fine pulverizing equipment to form fine ice fragments, wherein a length in a longitudinal axis direction of the ice fragments is not more than 1.0 mm and an average value thereof is in the range of 0.06 mm to 0.6 mm, and at least 80% of the ice fragments is in the range of 0.06 mm to 1.0 mm.

It is preferable that the average value thereof is in the range of 0.11 mm to 0.6 mm.

It is also preferable that at least 90% of the ice fragments is in the range of 0.06 mm to 1.0 mm. In this case, it is further preferable that the average value thereof is in the range of 0.06 mm to 0.6 mm. In this case, it is further more preferable that the average value thereof is in the range of 0.11 mm to 0.6 mm.

Moreover, in the present application, the term "size of the ice fragments" and the term "length of the ice fragments" are defined to be the length of the longest axis of the ice fragment.

### DESCRIPTION OF THE PREFERRED EMBODIMENTS

The cold confectionery has such homogeneous and smooth texture and taste as the ice creams and sherbet and also include a sufficient amount of ice fragments apparently sensible in mouth for providing a rich cold and cool feeling. It is, therefore, important that the ice fragments existing in the cold confectionery are controlled finely and uniformity in the size such that the ice fragments are sensible. The size and distribution of the individual ice fragments present in the cold confectionery should be as follows. The size of the ice fragments measured with a microscope is such that a length in a longitudinal axis direction of the ice fragments is not more than 1.0 mm and an average value thereof is in the range of 0.06 mm to 1.0 mm, and at least 80% of the ice fragments is in the range of 0.06 mm to 1.0 mm. It is preferable that the average value thereof is in the range of 0.06 mm to 0.6 mm. In this case, it is further preferable that the average value thereof is in the range of 0.11 mm to 0.6 mm. It is also preferable that at least 90% of the ice fragments is in the range of 0.06 mm to 1.0 mm. In this case, it is further preferable that the average value thereof is in the range of 0.06 mm to 0.6 mm. In this case, it is further more preferable that the average value thereof is in the range of 0.11 mm to 0.6 mm.

The ice fragments controlled have accurately uniformed sizes enough to be sensible are contained in the cold confectionery to provide the cold confectionery which is rich in cold and cool feeling due to the ice fragments and also which is smooth in taste and texture as well as provides the spoonability.

Furthermore, if the cold confectionery includes less than 3% of oils and fats and mot more than 3% of non-fat milk solid component, the combination of the oils and fats with the non-fat milk solid component cases a relative effect by the smoothness of the texture, whereby the cold confectionery is rich in the cold and cool feeling and has a better spoonability and an enhanced creamy taste. It is preferable that the upper limit of the oils and fats is 24% and the upper limit of the non-fat milk solid component is 20%.

Moreover, if the cold confectionery includes less than 3% of the oils and fats and less than 3% of the non-fat milk solid component and more preferably includes less than 0.5% of the oils and fats and less than 3% of the non-fat milk solid component, then the cold confectionery has the good texture for spoonability and the good taste with providing more enhanced cold and cool feelings. Even if the entire of the cold confectionery has not less than 3% of the oils and fats and not less than 3% of the non-fat milk solid component, the following is necessary for the present invention. Namely, the oils and fats are locally present at an upper portion or a center portion of the cold confectionery in the form of whole-fat sweetened condensed milk, whipped cream or sauce, so that the oils and fats clearly distinguishable from the remaining part including the ice fragments, provided that the remaining part includes less than 3% of the oils and fats and less than 3% of the non-fat milk solid component.

In accordance with the present invention, the processes of fragmentation and separation of the ice may be carried out in any time during the processes for forming the cold confectionery which has such homogeneous and smooth texture and taste as the ice creams and sherbet and also include a sufficient amount of ice fragments apparently sensible in mouth for providing a rich cold and cool feeling, provided that in the measurement by microscope, a length in a longitudinal axis direction of said ice fragments is not more than 1.0 mm and an average value thereof is in the range of 0.06 mm to 1.0 mm, and at least 80% of the ice fragments is in the range of 0.06 mm to 1.0 mm. Preferably, the average value thereof is in the range of 0.06 mm to 0.6 mm. In this case, it is further preferable that the average value thereof is in the range of 0.11 mm to 0.6 mm. Further preferably, at least 90% of the ice fragments is in the range of 0.06 mm to 1.0 mm. Furthermore preferably, the average value thereof is in the range of 0.06 mm to 0.6 mm. Also preferably, the average value thereof is in the range of 0.11 mm to 0.6 mm.

There is no particular limitation to the available machine, provided that the machine is capable of fragmentation and separation of the ice fragments. The general equipment may be available. It is preferable to use the continuous type fine pulverizing equipment, and especially fine pulverizing equipment with a cutting head. It is possible to use the continuous-type fine pulverizing equipment to improve the high efficiency and shorten the manufacturing time for obtaining the cold confectionery including the ice fragments.

The followings are available processes for fragmentation and separation of the ice fragments sensible and the above uniform distribution and size.
(1)A method of obtaining the cold confectionery by mixing fine ice fragments uniform in size in the predetermined range with the ice mix frozen by the freezer.
(2)A method of obtaining the cold confectionery by mixing fine ice fragments uniform in size in the predetermined range with the ice mix for subsequent freezing the same.
(3)A method of obtaining the cold confectionery by mixing fine ice fragments uniform in size in the predetermined range with the ice mix for subsequent filling the mixture into the cup.
(4)A method of obtaining the cold confectionery by mixing ice lumps of a suitable size for the shaving machine with the ice mix previously frozen by the freezer for subsequent preparing the fine ice fragments of the size in the predetermined range.
(5)A method of obtaining the cold confectionery by mixing the ice lumps with the certain size with the ice mix for subsequent preparation of the fine ice fragments of the size in the predetermined range before freezing the same.
(6)A method of obtaining the cold confectionery by mixing the ice lumps with the certain size with the ice mix for subsequent preparation of the fine ice fragments of the uniform size before the filling the same.

The methods should not be limited to the above, provided that the above cold confectionery is available.

It is preferable that the ice lumps with the certain size is mixed with the ice mix frozen by the freezer before the continuous-type fine pulverizing equipment particularly with the cutting head is used to shaving the ice fragments or ice lumps in the ice mix to prepare the uniform and fine ice fragments with the above size and distribution.

A ratio of mixing the ice mix to the ice lumps or ice fragments may optionally be set. If the amount if ice is too low, then melting of the ice is likely to appear and made difficult to sense the ice. If the amount of ice is too large, then this makes it difficult to obtain a uniform mix, resulting in a drop in fluidity in the mixed states. This also causes that the subsequent processes are not applicable. It is also possible that the taste, texture and feeling in mouth are different from what are intended in accordance with the present invention. A preferable mixing ratio of the ice mix to the ice is 1 : 0.3 to 1 : 4, ore preferably 1 : 0.5 to 1 : 2.

Furthermore, the ice mix is mixed with the ice to form the cold confectionery, for which reason the oils and fats, the non-fat milk solid component and other solid component in the cold confectionery mix are diluted by the admixture of ice into the range of concentration from about one third to about two third, even depending upon the mixing proportions. If the final products are intended to be ice creams defined by the fair competition regulations, it is necessary to draw an attention to the composition of the ice mix and the amount of ice to be mixed.

The cold confectionery mix may be either a cold confectionery syrup free of milk component or ice cream mix including oils and fats and non-fat milk solid component. The flavor of the syrup like mix may be fruits flavors lemon, orange, pineapple, melon and strawberry. The flavor of the mix including the oils and fats and non-fat milk solid component may be various flavors such as vanilla, coffee, chocolate, tea, fruits such as strawberry, and fermented milk.

There is no particular limitation to the ice to be mixed to the cold confectionery mix, provided that the ice fragment size on the final stage has the above size distribution defined in the present invention. There is no problem to use the ice lumps with the proper size and shape suitable for the machine used in the present invention. There is also no limitation to the method of preparing the ice lumps. Any machine is available as having been commercially and industrially used. If the freezer is used for freezing process, it is possible to mix the air into the cold confectionery mix, wherein a preferable over-run or preferable air content is in the range of about 10% to about 200%. If the air content is less than 10%, then the cold confectionery is too hard and is poor in smoothness. If the air content exceeds 200%, then it is difficult to fill the cold confectionery into the cup.

Whereas the present invention will be described in detail by taking examples, the present invention is not intended to be limited to the following examples.

### Examination 1 :

540.0 g of fresh cream (47% of fats), 160.0 g of skim-milk powders, 260.0 g of sugar, 100.0 g of starch syrup (75% of solid content), 2.0 g of emulsifier (glycerin fatty acid ester), 6.0 g of ice cream stabilizer and 932.0 g of water were heated at 80°C and dissolved by using a homo-mixer before the mixture was homogenized by the homogenizer under a homogenization pressure of 120 kg/cm² (80 kg/cm² on the first stage and 40 kg/cm² on the second stage). Subsequently, the mixture was cooled to 5°C to obtain an ice cream mix. 1800g of this mix was then added with 2.7g of vanilla essence for mixing the same before the ice cream mix was frozen by using an ice cream freezer to prepare an ice cream with a 50% over-run. 1 part by weight of ice lumps generally cubic-shaped to have each side of about 20 mm was added to 1 part by weight of the above ice cream. The commercial available continuous type fine pulverizing equipment was then used for fragmentation of the ice lumps to ice fragments thereby obtaining ice creams containing the uniform fine ice fragments. This ice cream was further filled into the paper cup of 150 ml for subsequent rapid cooling and hardening the same at -45°C.

In this method, variation changes in shape of the cutting head are made to prepare a plurality of ice creams different in size of the ice fragments. Photographs of the individual ice creams are taken by use of a microscope to measure individual sizes of the ice fragments and distribution thereof, so that the size of the ice fragments is decided by measuring the length of the longitudinal axis of 500 ice fragments.

Furthermore, the ice creams were rapidly cooled and harden at -45°C and then stored for 6 hours in a home freezer (-18°C) and a sensory test was made.

The results are shown on Tables 2 to 5.

**Table 2**

| | 1 | 2 | 3 | 4 | 5 | 6 |
|---|---|---|---|---|---|---|
| Average Size of the Ice Fragments (mm) | 0.05 | 0.05 | 0.05 | 0.06 | 0.06 | 0.06 |
| Maximum Size of the Ice Fragments (mm) | 0.6 | 1 | 1.2 | 0.6 | 1 | 1.2 |
| Ratio of Ice Fragments Size in 0.06 to 1.0 mm | 50% | 60% | 70% | 80% | 85% | 75% |
| Result of the Sensory test | | | | | | |
| Spoonability | ○ | ○ | × | ○ | ○ | × |
| Feeling | ○ | ○ | × | ○ | ○ | × |
| cold and cool feeling | × | × | ○ | ○ | ○ | ○ |
| Overall evaluations | × | × | × | ○ | ○ | × |

**Table 3**

| | 7 | 8 | 9 | 10 | 11 | 12 |
|---|---|---|---|---|---|---|
| Average Size of the Ice Fragments (mm) | 0.1 | 0.1 | 0.1 | 0.4 | 0.4 | 0.4 |
| Maximum Size of the Ice Fragments (mm) | 0.6 | 1 | 1.2 | 0.6 | 1 | 1.2 |
| Ratio of Ice Fragments Size in 0.06 to 1.0 mm | 85% | 85% | 70% | 90% | 85% | 75% |
| Result of the Sensory test | | | | | | |
| Spoonability | O | O | × | Ⓞ | O | × |
| Feeling | O | O | × | Ⓞ | O | × |
| cold and cool feeling | O | O | O | O | O | O |
| Overall evaluations | O | O | × | Ⓞ | O | × |

**Table 4**

| | 13 | 14 | 15 | 16 | 17 | 18 |
|---|---|---|---|---|---|---|
| Average Size of the Ice Fragments (mm) | 0.6 | 0.6 | 0.6 | 0.8 | 0.8 | 0.8 |
| Maximum Size of the Ice Fragments (mm) | 0.6 | 1 | 1.2 | 0.8 | 1 | 1.2 |
| Ratio of Ice Fragments Size in 0.06 to 1.0 mm | 80% | 90% | 75% | 85% | 85% | 70% |
| Result of the Sensory test | | | | | | |
| Spoonability | ○ | Ⓞ | × | ○ | ○ | × |
| Feeling | ○ | Ⓞ | × | ○ | ○ | × |
| cold and cool feeling | ○ | ○ | ○ | ○ | ○ | ○ |
| Overall evaluations | O | Ⓞ | × | O | O | × |

**Table 5**

| | 19 | 20 | 21 |
|---|---|---|---|
| Average Size of the Ice | 1 | 1 | 1.2 |
| Fragments (mm) | | | |
| Maximum Size of the Ice | 1 | 1.2 | 1.4 |
| Fragments (mm) | | | |
| Ratio of Ice | | | |
| Fragments Size | 80% | 70% | 60% |
| in 0.06 to 1.0 mm | | | |
| Result of the Sensory test | | | |
| Spoonability | O | × | × |
| Feeling | O | × | × |
| cold and cool feeling | O | O | O |
| Overall evaluations | O | × | × |

From the above results, it was confirmed that the cold confectioneries have ice fragments of not more than 1.0 mm in size and in the range of an average value from 0.06 to 1.0 mm, wherein at least 80% of the ice fragments is in the range of 0.06 mm to 1.0 mm, wherein such the cold confectioneries have the ice fragments clearly sensible in eating the same and are rich in cold and cool feeling due to the ice fragments as well as have a smooth texture and a smooth feeling in mouth. If the cold confectionery having the size of not more than 1.0 mm in size and in the range of an average value from 0.06 to 0.60 mm, wherein at least 80% of the ice fragments is in the range of 0.06 mm to 0.6 mm, then the effects are remarkable.

### Examples 1 and 2

Sugar, skim-milk powders, vegetable oils and fats for cold confectionery with a melting point of 28°C), starch syrup, emulsifier (glycerin mono-fatty acid ester) and stabilizer (facto-ice stabilizer) were used to prepare the cold confectionery mix in the following two compositions under the same conditions as examination 1.

**Table 6**

| Raw Material | Example 1 | Example 2 |
|---|---|---|
| Vegetable oils and fats for cold confectionery (melting point 28°C) | 5.0 | 2.0 |
| Sugar | 13.0 | 9.0 |
| Skim-milk powders | 5.3 | 2.1 |
| Starch syrup (solid component 75%) | 5.0 | 18.4 |
| Emulsifier (Glycerin fatty acid ester) | 0.1 | 0.1 |
| Stabilizer (lacto-ice stabilizer) | 0.3 | 0.3 |
| Water | 71.3 | 68.1 |
| Fat Content | 5.0 | 2.0 |
| Non-fat Milk Solid Content | 5.0 | 2.0 |
| Total Solid Content | 27.2 | 27.2 |
| Sweetness | 14.5 | 14.5 |

The above two types of the cold confectionery are the same in the total solid content and the sweetness in order to distinguish both in the feeling and flavor due to the difference in the non-fat milk solid content. After the vanilla essence was added in the same way as in the above examination 1, the cold confectionery mixes (brands 1 and 2) were frozen by using the ice cream freezer to prepare the cold confectioneries with a 50% over-run. 1 part by weight of ice lumps generally cubic-shaped to have each side of about 20 mm was added to 1 part by weight of each of these two types of the cold confectionery The commercially available continuous-type fine pulverizing equipment was used to conduct the fragmentation of the ice lumps to the ice fragments under the examination No. 10 of the examination 1, thereby obtaining the ice cream having the uniform fine ice fragments. This ice cream was then filled into the paper cup of 150 ml for subsequent rapid cooling and hardening at -45°C. The two types of the cold confectionery were then stored for 6 hours in the home freezer at -18°C and the sensory test was carried out. The results are shown on **Table 7.**

**Table 7**

| Result of Sensory Evaluation | Example 1 | Example 2 |
|---|---|---|
| Sensibility to Ice Fragments | Clearly sensible | Clearly sensible |
| Spoonability | Smooth | Smooth |
| Creamy feeling | Strong | Weak |
| Cold and cool feeling | Fairly Strong | Very Strong |
| Overall Evaluation | Good | Good |

As shown in Table 7, the cold confectioneries of Examples 1 and 2 are smooth as well as have good spoonability and clearly sensible ice fragments. The cold confectionery of Example 1 has 5% of fats and 5% of non-fat milk solid content and provide a strong creamy taste. The cold confectionery of Example 2 has 2% of fats and 2% of non-fat milk solid content and provide a strong cold and cool feeling.

### Example 3

3,600 g of sugar, 3,000 g of isomerized sugar, 3,000 g of starch syrup (75% of solid content), 120 g of stabilizer agent for sherbet and 18,000 g of water were heated and dissolved at 80°C in a homogenizer and then cooled to 5°C. 1,800 g of 1/5-concentrated orange juice, 1.2 g of orange coloring material, 30.0 g of orange flavor essence were added thereto and further water was added to make up 30,000 g (30 kg) in total weight thereby to obtain a cold confectionery mix. 39kg of this cold confectionery mix was cooled into the range of -1°C to 1 °C This mix was then mixed with 20 kg of ice fragments obtained by shaving ice pillars at -5°C by use of a productive ice grinding machine (40 cm x 40 cm x 120 cm) to obtain a cold confectionery mix with the shaved ices.

The cold confectionery mix with the shaved ices was subjected to the continuous fragmentation of the shaved ice by a high-speed cutting machine (continuous-type fine pulverizing equipment) to obtain the cold confectionery mix with the uniform fine ice fragments. This cold confectionery mix was frozen by using a continuous-type ice cream freezer to pick up the mix with an over-run of 30% at a temperature of -4.0°C for subsequent filling the same into a paper cup prior to the hardening at -45°C to obtain the cold confectionery with a desired orange flavor. A larger number of the fine ice fragments exists in this cold confectionery which provides a smooth and cold and cool feeling. The results of measuring the sizes of the ice fragments included in the cold confectionery by using a microscope are shown on Table 8.

**Table 8**

| Size Range of Ice Fragments | Content (%) |
|---|---|
| Less than 0.06 mm | 10.0 |
| Not less than 0.06 mm and less than 0.1 mm | 10.0 |
| Not less than 0.1 mm and less than 0.2 mm | 5.0 |
| Not less than 0.2 mm and less than 0.3 mm | 10.0 |
| Not less than 0.3 mm and less than 0.4 mm | 45.0 |
| Not less than 0.4 mm and less than 0.5 mm | 12.0 |
| Not less than 0.5 mm and less than 0.6 mm | 6.0 |
| Not less than 0.6 mm and less than 0.7 mm | 2.0 |
| Not less than 0.7 mm and not more than 1.0 mm | 0.0 |

The size of the ice fragments was determined by photographing the mixture by using a microscope and based upon distribution obtained by measuring the lengths of the longest axis of 500 ice fragments selected at random.

The numerical values shown on the table are numerical values obtained under the conditions of this example and do not define the size range of ice fragments in accordance with the present invention.

In particular, the size may optionally be changed by changing the cutting head of the continuous-type fine pulverizing equipment.

### Example 4

540.0 g of fresh cream (47% of fat), 160.0 g of skim-milk powders, 260.0 g of sugar, 100.0 g of starch syrup (75% of solid content), 2.0 g of emulsifier (glycerin fatty acid ester), 6.0 g of ice cream stabilizer and 932.0 g of water were heated and dissolved at 80°C by using a homo-mixer and then the mixture was homogenized by a homogenizer under a homogenization pressure of 120 kg/cm² (80 kg/cm² on the first stage, and 40 kg/cm² on the second stage). The mix was then cooled to 5°C to obtain an ice cream mix. 2.7g of vanilla essence was added to 1800 g of the ice cream mix and cooled into the range of -1°C to 1°C. 1 part by weight of ice lumps generally cubic-shaped to have each side of about 20 mm was added to 1 part by weight of this mix. The commercially available continuous-type fine pulverizing equipment was used for fragmentation to prepare ice fragments for subsequent freezing the same by an ice cream freezer, thereby obtaining an ice cream containing uniform fine ice fragments at an over-run of 40%. This ice cream was packed into 150 ml paper cup and cooled quickly to -45°C and harden to form the ice cream in the cups.

This ice cream was stored for 6 hours in the home freezer at -18°C for subsequent eating the same. This ice cream has the smooth spoonability and smooth taste as ice cream and deep and creamy taste like the ice cream, wherein the ice fragments are sensible and the ice cream provides a cold and cool feeling different from the conventional ice cream. The taste is good and novel.

### Example 5

540.0 g of fresh cream (47% of fat), 160.0 g of skim-milk powders, 260.0 g of sugar, 100.0 g of starch syrup (75% of solid content), 2.0 g of emulsifier (glycerin fatty acid ester), 6.0 g of ice cream stabilizer and 932.0 g of water were heated and dissolved at 80°C by using a homo-mixer. The mixture was homogenized by a homogenizer under a homogenization pressure of 120 kg/cm² (80 kg/cm² on the first stage and 40 kg/cm² on the second stage). The mixture was then cooled to 5°C to obtain 1800 g of the ice mix. 2.7g of vanilla essence was further added to obtain an ice cream mix. 1 part by weight of ice lumps generally cubic-shaped to have each side of about 20 mm was added to 1 part by weight of the ice cream with 50% over-run which was obtained by freezing the mix by the ice cream freezer. The fragmentation of the ice fragments was carried out by using the commercially available continuous-type fine pulverizing equipment to obtain the ice cream containing uniform fine ice fragments. This ice cream was packed into 150 ml paper cup and then cooled quickly to -45°C and harden to form the ice cream in cup.

This ice cream was stored for 6 hours in the home freezer at -18°C for subsequent eating the same. This ice cream has the smooth spoonability and smooth taste as ice cream and deep and creamy taste like the ice cream, wherein the ice fragments are sensible and the ice cream provides a cold and cool feeling different from the conventional ice cream. The taste is good and novel.

### Example 6

1200.0 g of fresh cream (47% of fats), 500.0 g of vegetable fats for cold confectionery with a melting point of 28°C, 2400.0 g of skim concentrated milk, 1300.0 g of sugar, 500.0 g of starch syrup (75% of the solid content), 10.0 g of emulsifier (glycerin fatty acid ester), 30.0 g of ice milk stabilizer and 4060.0 g of water were heated and dissolved at 80°C by using a homo-mixer. The mixture was homogenized by the homogenizer under a homogenization pressure of 175 kg/cm² (125 kg/cm² on the first stage and 50 kg/cm² on the second stage). The mixture was cooled to 5°C to obtain an ice milk mix. 14.7g of vanilla essence was added to 9800 g of said ice milk mix. The mixture was cooled into the range of -1°C to 1°C. 1 part by weight of ice fragments obtained by shaving the ice lumps with a productive ice grinder was added to 1 part by weight of the mix. The fragmentation of the ice fragments was carried out by using commercially available continuous-type fine pulverizing equipment. The mixture was frozen quickly by using the continuous-type ice cream freezer to obtain an ice milk containing uniform fine fragments with a 30% over-run. The ice milk was packed into 150 ml paper cup and cooled quickly to -45°C and harden to form the ice milk in cup.

This ice milk was stored for 6 hours in the home freezer at -18°C for subsequent eating the same. This ice milk has the smooth spoonability and smooth taste as ice milk and deep and creamy taste like the ice milk, wherein the ice fragments are sensible and the ice milk provides a cold and cool feeling different from the conventional ice milk. The taste is good and novel.

### Example 7

1680.0 g of vegetable fat for cold confectioneries (melting point 28°C), 1560.0 g of de-fatted milk powder, 2600.0 g of sugar, 1000.0 g of rice honey, 20.0 g of emulsifier (glycerin fatty acid ester), 60.0 g of lacto-ice stabilizer and 13080.0 g of water were heated and dissolved at 80°C by using a homo-mixer. The mixture was homogenized by the homogenizer under a homogenization pressure of 175 kg/cm² (125 kg/cm² on the first stage and 50 kg/cm² on the second stage). The mixture was cooled to 5°C to obtain an ice mix. 29.7 g of vanilla essence was added to 19800.0 g of said lacto-ice mix to obtain a lacto-ice mix. The lacto-ice was frozen by using the continuous-type ice cream freezer to obtain a lacto-ice with a 70% over-run.

1 part by weight of ice fragments obtained by shaving the ice lumps by using a productive ice shaving machine was added to 2 parts by weight of this lacto-ice. The fragmentation of the ice fragments was carried out by using the commercially available continuous-type fine pulverizing equipment, thereby to obtain a lacto-ice containing the uniform fine ice fragments.

### Example 8

240.0 g of sugar, 200.0 g of isomerized sugar, 200 g of starch syrup (75% of solid content), 8.0 g of stabilizer for sherbet and 1200 g of water were heated and dissolved at 80°C by the homo-mixer and then cooled to 5°C. 120.0 g of 1/5-concentrated orange juice, 0.08 g of orange coloring material, and 2.0 g of orange essence were added and further water was added to make up 2000.0 g in total thereby to obtain a cold confectionery mix. 600 g of this cold confectionery mix cooled into the range of -1°C to 1°C and 400 g of 2.5 cm-cubes of ice were introduced into a high-speed mixer and stilled for 2 seconds at a low speed and further stilled for 20 seconds at a high speed of 37,000 rpm thereby obtaining the cold confectionery mix containing shaved ices.

This cold confectionery mix containing shaved ices was frozen by using a batch-type ice cream freezer and was then picked up with an over-run of 30% before this mix was packed into 200 ml long-type plastic cup and harden at -45°C, thereby to obtain the desired cold confectionery. It was visibly possible to confirm that a large number of fine ice fragments are present in the cold confectionery. Needless to say, not only prior to freezing the same, but also after hardening the same, the cold confectionery has a smooth spoonability and provides the cold and cool feeling as ice and a rich orange flavor for good taste. Furthermore, this cold confectionery was placed in a room of 25°C, before the cold confectionery was stilled by use of spoon. The cold confectionery is so smooth as easily drunk but ice particles could be confirmed. The cold confectionery provides a rich taste and a smooth feeling in drinking the same and also provides cold and cool feeling and refreshable feeling.

In accordance with the present invention, this ice cream has the smooth spoonability and smooth taste as ice cream and deep and creamy taste like the ice cream, wherein the ice fragments are sensible and the ice cream provides a cold and cool feeling different from the conventional ice cream. The cold confectionery of this invention may be prepared at a high efficiency by using pulverizing equipment, and preferably using the continuous-type fine pulverizing equipment.

## Claims

1. A cold confectionery having fine ice fragments, wherein a length in a longitudinal axis direction of said ice fragments is not more than 1.0 mm and an average value thereof is in the range of 0.06 mm to 0.6 mm, and at least 80% of the ice fragments is in the range of 0.06 mm to 1.0 mm.

2. The cold confectionery according to claim 1, wherein said average value thereof is in the range of 0.11 mm to 0.6 mm.

3. The cold confectionery according to claim 1 or 2, wherein at least 90% of the ice fragments is in the range of 0.06 mm to 1.0 mm.

4. The cold confectionery according to claim 1, wherein the cold confectionery has a fat content of not less than 3% and a non-fat milk solid content of not less than 3%.

5. The cold confectionery according to claim 1, wherein the cold confectionery has a fat content of less than 3% and a non-fat milk solid content of less than 3%.

6. A method of preparing a cold confectionery having ice fragments which are prepared by a pulverizing equipment, wherein a length in a longitudinal axis direction of said ice fragments is not more than 1.0 mm and an average value thereof is in the range of 0.06 mm to 0.6 mm, and at least 80% of the ice fragments is in the range of 0.06 mm to 1.0 mm.

7. The method according to claim 6, wherein the pulverizing equipment is a continuous-type fine pulverizing equipment.

8. The method of claim 6, wherein lumps of ice are mixed with a cold confectionery mix frozen by a freezer to obtain a mixture and subsequently said mixture then is treated by a continuous-type fine pulverizing equipment to form said fine ice fragments.

## Patentansprüche

1. Kaltes Konfektprodukt mit feinen Eisteilchen, wobei die Länge in Richtung der Längsachse der Eisteilchen nicht mehr als 1,0 mm beträgt und der Durchschnitt im Bereich von 0,06 mm bis 0,6 mm liegt, und mindestens 80% der Eisteilchen im Bereich von 0,06 mm bis 1,0 mm liegen.

2. Kaltes Konfektprodukt nach Anspruch 1, wobei der Durchschnitt im Bereich von 0,11 mm bis 0,6 mm liegt.

3. Kaltes Konfektprodukt nach Anspruch 1 oder 2, wobei mindestens 90% der Eisteilchen im Bereich von 0,06 mm bis 1,0 mm liegen.

4. Kaltes Konfektprodukt nach Anspruch 1, wobei das kalte Konfektprodukt einen Fettgehalt von nicht weniger als 3% und einen Gehalt an fettfreien Milchfeststoffen von nicht weniger als 3% hat.

5. Kaltes Konfektprodukt nach Anspruch 1, wobei das kalte Konfektprodukt einen Fettgehalt von weniger als 3% und einen Gehalt an fettfreien Milchfeststoffen von weniger als 3% hat.

6. Verfahren zur Herstellung eines kalten Konfektproduktes mit feinen Eisteilchen, die durch eine Pulverisier-Vorrichtung hergestellt werden, wobei die Länge in Richtung der Längsachse der Eisteilchen nicht mehr als 1,0 mm ist und der Durchschnitt im Bereich von 0,06 mm bis 0,6 mm liegt, und mindestens 80% der Eisteilchen im Bereich von 0,06 mm bis 1,0 mm liegen.

7. Verfahren nach Anspruch 6, wobei die Pulverisier-Vorrichtung eine Feinpulverisier-Vorrichtung vom kontinuierlichen Typ ist.

8. Verfahren nach Anspruch 6, wobei Eisklumpen mit einer in einem Gefriergerät gefrorenen Mischung eines kalten Konfektproduktes gemischt werden, um ein Gemisch zu erhalten, und das Gemisch anschließend mit einer Feinpulverisier-Vorrichtung vom kontinuierlichen Typ behandelt wird, um die feinen Eisteilchen zu bilden.

## Revendications

1. Confiserie froide ayant de fins fragments de glace, dans laquelle une longueur dans la direction d'un axe longitudinal desdits fragments de glace n'est pas supérieure à 1,0 mm et une valeur moyenne de celle-ci est dans la fourchette de 0,06 mm à 0,6 mm, et au moins 80 % des fragments de glace sont dans la fourchette de 0,06 mm à 1,0 mm.

2. Confiserie froide selon la revendication 1, dans laquelle ladite valeur moyenne de celle-ci est dans la fourchette de 0,11 mm à 0,6 mm.

3. Confiserie froide selon la revendication 1 ou 2, dans laquelle au moins 90 % des fragments de glace sont dans la fourchette de 0,06 mm à 1,0 mm..

4. Confiserie froide selon la revendication 1, dans laquelle la confiserie froide a une teneur en matières grasses non inférieure à 3 % et une teneur en solides non gras du lait non inférieure à 3 %.

5. Confiserie froide selon la revendication 1, dans laquelle la confiserie froide a une teneur en matières grasses non inférieure à 3 % et une teneur en solides non gras du lait inférieure à 3 %.

6. Procédé de préparation d'une confiserie froide ayant des fragments de glace qui sont préparés par un équipement de pulvérisation, dans lequel une longueur dans une direction d'un axe longitudinal desdits fragments de glace n'est pas supérieure à 1,0 mm et une valeur moyenne de celle-ci est dans la fourchette de 0,06 mm à 0,6 mm, et au moins 80 % des fragments de glace sont dans la fourchette de 0,06 mm à 1,0 mm.

7. Procédé selon la revendication 6, dans lequel l'équipement de pulvérisation est un équipement de pulvérisation fine de type continu.

8. Procédé selon la revendication 6, dans lequel des morceaux de glace sont mélangés à un mélange de confiserie froide gelé par un congélateur pour obtenir un mélange et ultérieurement ledit mélange est ensuite traité par un équipement de pulvérisation fine de type continu pour former lesdits fins fragments de glace.
